# FASCICULE DE BREVET EUROPEEN

(11) **EP 0 658 731 B1**
(45) Date de publication et mention de la délivrance du brevet: **29.07.1998**
(21) Numéro de dépôt: 93830508.3
(22) Date de dépôt: 16.12.1993
(51) Int. Cl.: F25B 15/00

(54) **Machine thermique à absorption ayant un ou plusieurs appareils composants placés sur des systèmes rotatifs**
Absorptionswärmemaschine mit einem oder mehreren auf drehenden Vorrichtungen angeordneten Gerätebauteilen
Thermal absorption machine with one or several device components placed on rotary systems

(43) Date de publication de la demande: 21.06.1995
(73) Titulaire: Laratta, Fabio, 00194 Roma (IT)
(72) Inventeur: Laratta, Fabio, 00194 Roma (IT)

(56) Documents cités:
- EP-A- 0 327 230
- FR-A- 862 727
- FR-A- 2 441 135
- GB-A- 2 241 774
- US-A- 3 740 966
- US-A- 4 010 018

## Description

L'object de la présente invention est une machine thermique à absorption qui peut être utilisée soit comme machine frigorifique, soit comme pompe à chaleur, comprenante un ou plusieurs générateurs, condenseurs, absorbeurs, évaporateurs, circuits par lesquels ces appareils échangent de la chaleur avec l'exterieur, une quantitée covenable de fluide frigorigène, une quantité convenable de substance absorbante, des conduits de connection entre les appareils de la machine, un ou plusieurs systèmes d'actionnement, par exemple des moteurs electriques, qui mettent en rotation un ou plusieurs systèmes rotatifs.

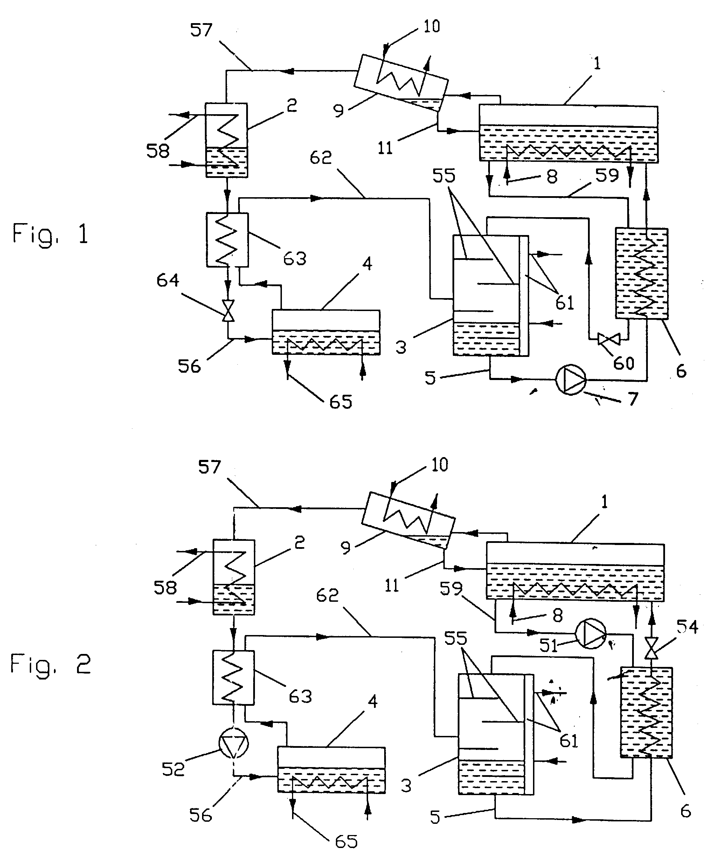

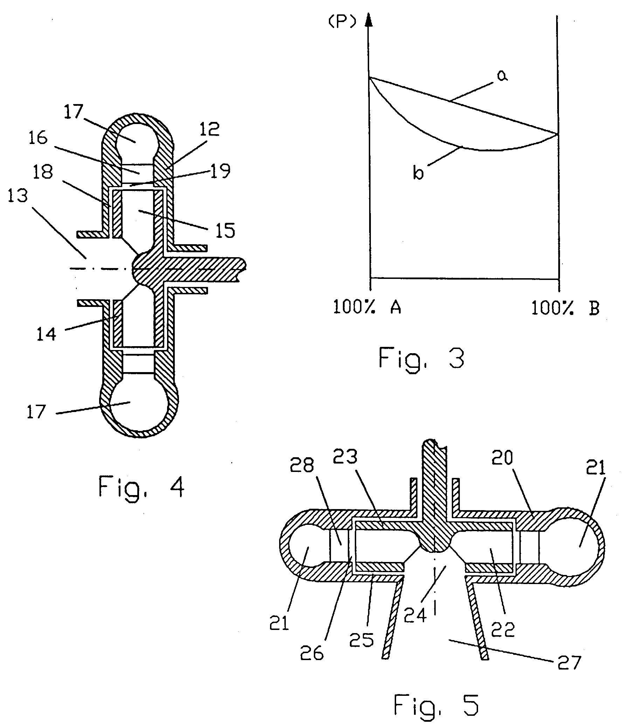

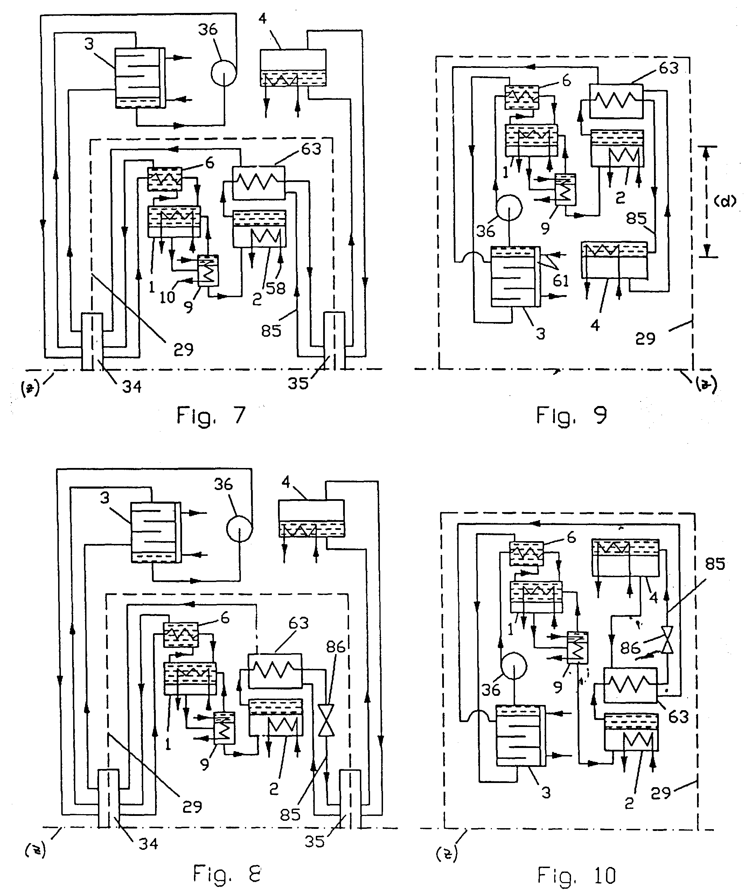

Une description des machines à absorption est contenue dans le texte "Lezioni di Fisica Tecnica", auteur M. Felli, editeur ESA, Milan 1990, pages 431-503. Elles peuvent être utilisées soit comme machines frigorifiques, soit comme pompes à chaleur. Dans la figure 1 est illustré le schéma de fonctionnement d'une machine frigorifique à absorption qui utilise comme mélange fluide frigorigène - absorbant, une solution d'eau et d'ammoniaque: le système générateur 1 - condenseur 2 se trouve à une pression P2 plus élevée par rapport à celle du système absorbeur 3 - évaporateur 4; un débit Q1 de solution riche (c'est à dire riche en fluide frigorigène) parcourt le conduit 5, et est envoyé de l'absorbeur 3 à l'échangeur 6 et successivement au générateur 1 par l'action de la pompe 7; pendant le passage dans le générateur le circuit 8 échauffe et cède de la chaleur à la solution à une température T1, et une certaine quantité d'eau et d'ammoniaque s'évapore; la vapeur d'eau condense dans le séparateur 9, sur les conduits du circuit 10, et retourne en forme liquide dans le générateur 1 par le conduit il sous l'action de la force de gravité, un debit Q3 d'ammoniaque, par le conduit 57, parvient dans le condenseur 2 où condense à température T2 sur les paroles du circuit 58; le debit Q2 de "solution pauvre" (c'est à dire pauvre en fluide frigorigène) qui sort du générateur, par le conduit 59 parvient dans l'échangeur 6, où elle est refroidie en contre-courant par la solution riche qui passe de l'absorbeur au générateur, elle passe successivement à travers la soupape d'étranglement 60 en diminuant sa propre pression de P2 à P1, et parvient dans l'absorbeur 3; en traversant l'absorbeur 3 la solution initialement "pauvre", qui à été refrcidie par le circuit 61 à température T3 (<T1), absorbe dans l'ensemble un débit Q3 d'ammoniaque à l'état de vapeur, provenante de l'évaporateur 4 par le conduit 62; l'ammoniaque liquide provenante du condenseur 2, par le conduit 56, passe d'abord dans l'échangeur 63 et en suite, à travers la valve d'étranglement 64 en diminuant sa propre pression de P2 à P1, et parvient dans l'évaporateur; le circuit 65 cède de la chaleur à la température T4 (<T2) à l'ammoniaque liquide contenue dans l'évaporateur 4 qui s'évapore; l'ammoniaque à l'état de liquide passe par l'échangeur 63 où ell'est échauffée en contre-courant par l'ammoniaque liquide qui passe du condenseur à l'évaporateur, et parvient dans l'évaporateur 3. L'évaporateur est normallement un dispositif à suintement, c'est à dire un dispositif dans lequel la solution pauvre rentre du haut et s'étend successivement sur des surfaces, par exemple, sur les plaques trouées 55 de figure 1, de sorte à réaliser une grande surface de contact entre la vapeur et la solution et/ou une grande surface d'échange thermique. Les machines à absorption qui utilisent comme absorbant une substance non-volatile, par exemple les machines qui emploient un mélange d'eau et de bromure de lithium, ne demandent pas l'emploi du séparateur 9; on peut également observer qu'une machine absorption peut être réalisée sens l'emploi des échangeurs 6 et 63, elle peut inclure, d'autre part, des échangeurs différents de ceux de figure 1. Dans la suite de ce texte on nommera: P2 la pression du "système générateur - condenseur", P1 la pression du système absorbeur - évaporateur"; T1, T2, T3, T4 les températures respectivement du générateur, du condenseur, de l'absorbeur et de l'évaporateur; "générateur" l'appareil dans lequel la concentration de fluide frigorigène dans la solution, dans l'ensemble, diminue; "absorbeur" l'appareil dans lequel la concentration de fluide frigorigène dans la solution, dans l'ensemble, augmente; "appareils primairs" les générateurs et les absorbeurs; "conduits d'adduction" d'un appareil, les conduits par les quels un fluide parvient à cet appareil; "conduits de refoulement" d'un appareil, les conduits par lesquels un fluide. quitte ces appareils; "solution riche", la solution qui est envoyée de l'absorbeur au générateur; "solution pauvre" la solution qui est envoyée du générateur à l'absorbeur; "solution" une portion quelconque du mélange de fluide frigorigène et d'absorbant présente dans la machine; "appareil" un élément quelconque de la machine, par exemple, un générateur, un condenseur, un absorbeur, un évaporateur, un séparateur, un échangeur de chaleur; "circuits" les conduits, par exemple, 8, 10, 58, 61 et 65 de figure 1, par lesquels les appareils échangent de la chaleur avec l'extérieur et "fluides vecteurs" les fluides qui traversent les "circuits". La figure 2 représente le schéma d'une machine à absorption dans laquelle P1 > P2, et dans laquelle on à aussi T1 < T3 et T2 < T4; son fonctionnement est le même que celui de la machine de figure 1 avec la différence que la passage de la solution pauvre du générateur à l'absorbeur est obtenu à l'aide de la pompe 51, le passage du fluide frigorigène liquide du condenseur à l'évaporateur est obtenu à l'aide de la pompe 52, et la solution riche qui passe de l'absorbeur au générateur diminue sa propre pression dans la valve d'étranglement 54. Dans le cas ou P2 > P1 le fonctionnement da la machine demande le passage d'un débit Q1 de solution riche de la pression P1 à la pression P2 et en même temps la détente d'un débit Q2 (<Q1) de solution pauvre de la pression P2 à la pression P1. En figure 3, la droite "a" montre la tension de vapeur totale, dans le cas idéal, d'un mélange de deux substances A et B, en fonction de la concentration de la solution; la courbe "b" de figure 3 montre la tension de vapeur totale en fonction de la concentration de la solution, dans le cas où le mélange dévie negativement de la loi de Raoult. Dans les machines à absorption actuelles, on ne récupère pas, normallement, l'énergie hydraulique du liquide qui se détend, cette énergie vient normalement dissipée dans une soupape d'étranglement (par exemple la soupape 60 de figure 1); dans des telles conditions, le rendement global de la machine se ressent particulierement de l'énergie demandée par la pompe qui assure la circulation de la solution, par exemple la pompe 7 de figure 1, cette demande d'énergie peut être réduite en employant des mélanges de fluide frigorigène et absorbant qui dévient négativement de la loi de Raoult. Avec la récupération de l'énergie de pression de la solution qui se détend, on augmente le rendement global du processus; ce même rendement est, en conséquence, moins sensible à cette caractéristique, ce qui permet l'emploi, dans la nouvelle machine, de mélanges de fluide frigorigène et absorbant qui ne dévient pas negativement de la loi de Raoult et qui ne sont pas, de ce fait, utilisés actuellement. Des considérations semblables peuvent être faites si P1 > P2. Il existent actuellement des dispositifs qui sont à même dé réaliser en même temps le pompage d'un liquide et la détente d'un autre avec récupération de l'énergie hydraulique de ce dernier; ils sont décrits, entre autre, dans les brevets US-A-4,187,173, US-A-4,288,326, US-A-4,432,876 et dans la demande de brevet européen EPA 90830140.1 déposée par qui écrit. L'emploi de ces dispositifs comporte toutefois des inconvenients: le fonctionnement correct de ces dispositifs demande que les liquides à l'interieur de celui-ci se maintiennent éloignés des conditions pour lesquelles on a leur ébulition, ce qui ne se produit pas dans le cas des machines à absorption; ils maintiennent constant le rapport entre le débit de solution riche envoyée au générateur et le débit de solution pauvre qui retourne au générateur et limitent en conséquence les possibilités de régulation de la machine; ces dispositifs sont, du genre volumétriques, aptes à être employés quand les débits de solution sont réduits.
Le pompage et la detente de la solution peuvent être obtenus en employant deux machines rotatives différentes, une pompe et une turbine; elle peut aussi être obtenue en plaçant tous les appareils primaires sur un système rotatif, selon les modalitées indiqués par le brevet US-A-4 010 018 de la colonne 47, figure 23 à la colonne 65, figure 9, et décrites par les figures 52-64.

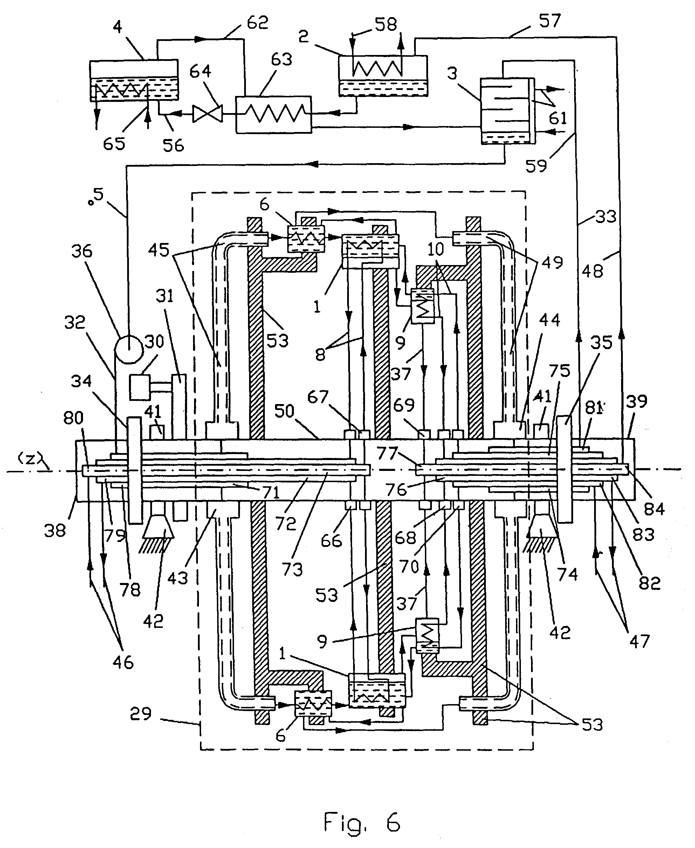

En figure 4 il est illustré le schéma générale d'une pompe centrifuge, qui inclus un corps de pompe 12, qui a une entrée 13 par laquelle le fluide parvient à la couronne mobile 14; le fluide parcourt les canaux 15 de la couronne mobile 14 en s'éloignant de l'axe de rotation, et augmente sa propre énergie de pression et/ou cinétique, suite du travail mécanique que les paroles de la couronne mobile accomplissent sur celui ci; le fluide qui sort des couronnes mobiles traverse les canaux fixes du diffuseur 16, où peut se réaliser aussi la conversion de partie de l'énergie cinétique en énergie de pression, et parvient au collecteur 17. Entre la couronne mobile et le corps de pompe il sont placés des éléments d'étanchéité 18, par exemple, à labyrinthe, au but de limiter le débit de fluide qui, à cause des gradients de pression, a tendence à retourner de la zone 19 positionnée entre la couronne mobile et le diffuseur, vers la zone d'entrée 13 de la pompe. En figure 5 il est illustré le schéma d'une turbine centripète, qui, inclus un corps de turbine 20, dans lequel est contenu un conduit cinconférentiel de distribution 21; le fluide entre dans la turbine au niveau du distributeur 21, en suite il est guidée par les conduits fixes 28 vers les canaux 22 de la couronne mobile 23; le fluide traverse les canaux 22 en se rapprochant de l'axe de rotation, il cède une partie de sa propre énergie cinétique et/ou de pression en accomplissant du travail mécanique sur les paroles de la couronne mobile; le fluide quitte les canaux de la couronne mobile au niveau d'une zone du dispositif proche de l'axe de rotation. Entre la couronne mobile et le corps de turbine il y a des éléments d'étanchéité 25, par exemple à labyrinthe, qui limitent le débit de fluide que, par effet des gradients de pression, tend à court-circuiter les canaux de la couronne mobile, en passant diréctement de la zone 26 à la zone 24 de la turbine sans accomplir du travail mécanique sur la couronne mobile. Le fluide passe, en suite, dans le diffuseur 27.
Le corps de pompe 12 de figure 4 et le corps de turbine 20 de figure 5 sont normallement des éléments coûteux, en particulier dans le cas où la pression maximale du processus est élevée, par exemple, dans le cas des machines à absorption qui emploient un mélange d'eau et d'ammoniaque comme couple de fluide frigorigène et absorbant (≈ 20 bar), et si les débits, et en conséquence, les dimensions de ces éléments sont élevées.

L'object de la présente invention est une machine thermique à absorption, qui permet de résoudre les inconvénients indiqués en précédence, en particulier elle permet d'obtenir en partie ou entièrement l'augmentation de pression de la solution qui passe d'un appareil primaire à un'autre agissant à une pression plus élevée, sans l'emploi de pompes traditionnelles, et d'obtenir en partie ou entièrement la récupération de l'énergie de pression de la solution qui passe d'un appareil primaire à un autre agissant à une pression inférieure, sans l'emploi de turbines traditionnelles. Ceci est obtenu, selon l'invention, en plaçant un ou plusieurs des appareils primaires agissant à pression plus élevée à l'intérieur de systèmes rotatifs tandis que les appareils primaires agissants à pression inférieure sont fixes: la solution qui parvient dans les appareils primaires agissant à pression plus élevée traverse des conduits, solidaires avec les systèmes rotatifs dans les quels ces appareils sont placés, ces conduits, lorsque ces systèmes rotatifs sont maintenus en rotation, accomplissent du travail mécanique sur la solution qui augmente sa pression jusqu'à la valeur démandée à l'entrée de ces appareils; la solution qui s'éloigne de ces appareils traverse des conduits, solidaires avec le système rotatif sur lequel ces appareils sont placés, et accomplit, lorsque ces systèmes rotatifs sont maintenus en rotation, du travail mécanique sur ces conduits en diminuant sa propre pression.
En figure 6 il est indiqué un exemple d'application de l'invention dans lequel P1 < P2 et le couple fluide frigorigène - absorbant utilisé est le couple eau - ammoniaque. Le dispositif de figure 6 inclus un système rotatif 29 qui peut être entraîné en rotation par le moteur 30 qui agit sur une courroie de transmission 31; sur le système rotatif 29 sont placés un ou plusieurs couples de générateurs 1, de séparateurs 9 et d'échangeurs 6, positionnés de façon symétrique par rapport à l'axe (z); les conduits semblables réliés aux appareils placés sur le système rotatif (par exemple tous les conduits de refoulement des circuits 8) aboutissent sur les éléments 43, 44, 66, 67, 68, 69 et 70 qu'on nommera "distributeurs" ou "collecteurs" suivant que le fluide qu'y parvient doit atteindre les appareils placés sur le système rotatif ou qu'il parvient de ceux-ci; par exemple, la solution riche est distribuée aux conduits 45 qui alimentent les échangeurs de chaleur 6 par le distributeur 43, la solution pauvre provenante des générateurs par les conduits 49 est receuillie par le collecteur 44; tous les collecteurs et les distributeurs du système rotatif sont réliés à des sections de passage annulaires 71, 72, 73, 74, 75, 76 et 77 réalisés dans l'arbre 50, ce dernier étant solidaire au système rotatif, aux-quelles correspondent les sections annulaires 78, 79, 80 ,81, 82, 83 et 84 réalisés dans les arbres fixes 38 et 39 de sorte qu'il soit possible, à l'aide des joints rotatifs multiples 34 et 35, assurer la communication entre les conduits fixes 32, 33, 46, 47 et 48 et les correspondents conduits du système rotatif, c'est à dire, respectivement, les conduits 45, 49, 8, 10 et 37; la solution est maintenue en circulation par la pompe 36; le système rotatif 29 (qu'on nommera parfois simplement "système" dans la suite de ce texte) est lié au châssis 42 de la machine par des roulement à billes 41; tous les appareils placés sur le système rotatif sont liés rigidement à celui-ci et il sont maintenus en position par des éléments de support 53, qui sont liés rigidement à l'arbre 50; les section de passage des conduits du système rotatif traversés par la solution riche et par la solution pauvre sont mises en évidence et hachurées dans le dessin de figure 1; les différents éléments sont placés sur le système rotatif de sorte qu'il soit statiquement et dynamiquement équilibré.
Le fonctionnement du dispositif de figure 6 est semblable à celui du dispositif de figure 1, avec la différence que la variation de pression de la solution qui passe de l'absorbeur 3 aux générateurs 1 et des générateurs 1 à l'absorbeur 3 ne demande pas l'emploi de la pompe 7 et de la soupape 60 de figure 1. La solution riche provenante du conduit 32 parvient au distributeur 43 d'où elle est distribuée aux conduits 45 solidaires avec le système rotatif; en traversant les conduits 45 la solution s'éloigne de l'axe de rotation (z) et augmente sa propre pression, d'une manière analogue à ce qu'il se produit dans les couronnes mobiles des pompes centrifuges; à l'énergie de pression acquise par la solution riche correspond un travail accomplis sur elle par les paroles des conduits 45; ces conduits 45 transmettent, de ce fait, dans l'ensemble, au système rotatif, un moment M1 résistent, c'est à dire dirigé en sens opposé par rapport à celui de rotation du système. La solution pauvre, à la sortie des générateurs 1, se refoidit dans les échangeurs 6 et entre dans les conduits 49; en traversant les conduits 49, la solution pauvre diminue sa propre pression, d'une manière analogue à ce qu'il se produit dans les couronnes mobiles des turbines hydrauliques centripètes; à l'énergie cedée par la solution pauvre correspond un travail mécanique qu'elle accomplit sur les paroles des conduits 49; ces conduits 49 transmettent, de ce fait, dans l'ensemble, un moment moteur M2, dirigé en même sens que celui de rotation du système. La vapeur d'ammoniaque qui parcourt le conduit 37 se rapproche de l'axe de rotation et diminue sa propre pression de façon analogue à ce qu'il se produit dans les turbines à gas centripètes: à l'énergie cedée par la vapeur correspond un travail mécanique accomplit par celle-ci sur les paroles du conduit 37; ces conduits transmettent, de ce fait, dans l'ensemble, um moment moteur M3, dirigé en même sans que celui de rotation du système. Dans des conditions idéales on a que M1 = M2 + M3: l'énergie mécanique (cinétique et de pression) cedée par le système 29 au débit Q1 de solution riche qui passe du conduit fixe 32 aux générateurs 1 est égàle à l'énergie mécanique restituée au système 29 par le débit Q2 de solution pauvre qui passe des générateurs 1 au conduit fixe 33 et par le débit Q3 de vapeur d'ammoniaque qui passe des générateurs 1 au conduit fixe 48; dans ces conditions le système rotatif n'est pas soumis à aucun moment resistent, ceci peut également être deduit par le fait que la variation du moment de la quantité de mouvement est nulle, en condition de fonctionnement à régime de la machine. On peut observer que dans le cas de figure 6, si d'une part, la variation de pression de la vapeur qui parcourt le conduit 37 est importante pour les considérations énergétiques précédemment citées, elle est beaucoup plus petite de la variation de pression (P2 - P1) de la solution qui parcourt les conduits 45 et 49, à cause de la grande différence de densité qu'il y a normallement, entre la solution qui est à l'etat de liquide, et la vapeur de fluide frigorigène: la valeur de la pression de la vapeur dans le générateur 1 est, de ce fait, proche à celle de la vapeur dans le condenseur 2. Dans le cas de figure 6, l'énergie de pression de la solution pauvre est récupérée completement dans le système rotatif, et la fonction de la pompe 36 est simplement celle de compenser les pertes de charge hydrauliques qu'on rencontre pour maintenir la solution en circulation. Le recouvrement de l'énergie hydraulique de pression de la solution pauvre dans les conduits 49 peut egalemet être partiel, et dans ce cas il est nécessaire d'émployer un système de dépressurisation de la solution pauvre, par exemple une ou plusieures soupapes ou une ou plusieures turbines en aval du système rotatif; dans ce cas la pompe 36 a aussi la fonction d'assurer une partie de l'augmentation de la pression de la solution riche qui passe de l'absorbeur aux générateurs. La rotation des systèmes 29 peut être actionnée même seulement de temps en temps, par exemple, au but d'augmenter, en des instants particuliers, la pression maximale du processus réalisé par la machine. Dans le cas où P1 > P2, on obtient un exemple d'application de l'invention avec un dispositif tel que celui de figure 6, dans lequel, à la place des générateurs, on place sur le système rotatif 29 des absorbeurs.
Les avantages de la machine object de ce brevet, sont semblables à ceux offerts par le dispositif décrit dans le brevet US-A-4 010 018 mais ils sont obtenu en gardant fixes les appareils primaires agissant à pression inférieure; ce qui permet de réduire la masse du système rotatif. Les avantages sont décrits dans la suite.
Les conduits 45 de figure 6 remplissent la même tâche des canaux 15 de la couronne mobile 14 de figure 4, ils terminent toutefois sur les appareils qui reçoivent le liquide en pression, soit les échangeurs 6, et il n'est pas nécessaire d'utiliser le corps de pompe 12 de figure 4, pour recceuillir le fluide à la sortie des canaux 15; de mànière analogue, les conduits 49 de figure 6, qui agissent comme les canaux 22 de la couronne mobile 23 de la turbine centripète de figure 5, sont alimentés diréctement par les générateurs 1, et ne demandent pas l'emploi du corps de turbine 20 de figure 5 pour alimenter les conduits 22 de la couronne mobile. Le dispositif de figure 6 permet donc, quand le système 29 est maintenu en rotation, d'obtenir l'augmentation de pression de la solution, en partie ou entièrement, sans l'emploi du corps de pompe 12 de figure 4, et d'obtenir en partie ou entièrement la diminution de pression de la solution, avec le recouvrement de son énergie hydraulique, sans l'emploi du corps de turbine 20 de figure 5; ce résultat est obtenu au niveau de zones de la machine où les pressions sont les plus élevées, c'est à dire, dans les conditions pour lesquelles le corps de pompe 12 et le corps de turbine 20 sont plus onéreux.
La réalisation des conduits 45 de figure 6 est plus simple par rapport à celle de la couronne mobile 14 de figure 4 qui accomplit une tâche analogue, en particulier, car il n'est pas nécessaire d'utiliser, comme dans le cas de figure 4, des éléments d'étanchéité 18 entre la couronne mobile et le corps de pompe 12, ces éléments 18 sont normallement du type à labyrinthe et demandent une grande précision dans l'accouplement entre la couronne mobile et le corps de pompe. Pour des raisons analogues la réalisation des conduits 49 de figure 6 est plus simple par rapport à celle de la couronne mobile 23 de figure 5.
Le rendement du procédé de pompage de la solution dans le cas de figure 6, est plus élevée que celui obtenu à l'aide de la pompe de figure 4, pour des mêmes conditions de dynamique des fluides, car il n'y a pas, dans le premier cas, l'effet de recirculation de la solution à travers les éléments d'étanchéité 18 de figure 4.

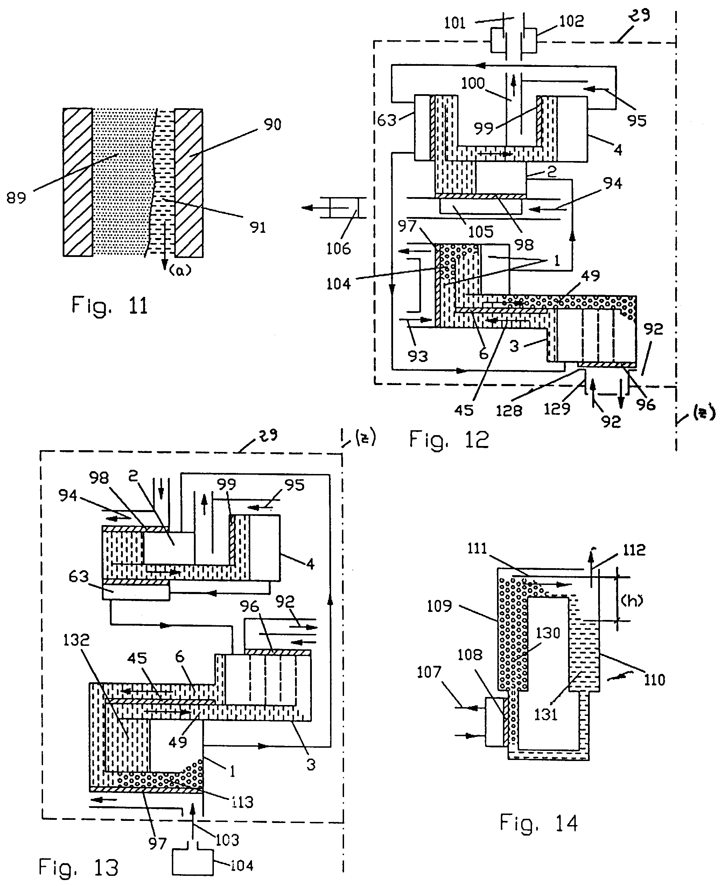

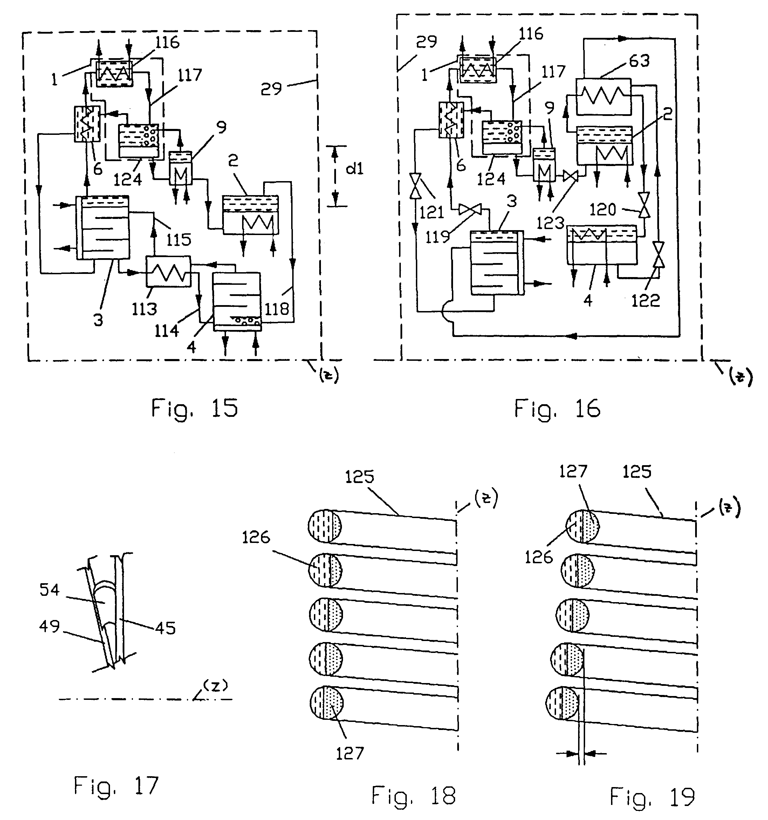

Dans le dispositif de figure 6 l'énergie demandée pour assurer la circulation de la solution est simplement celle nécessaire pour compenser les pertes de charge du circuit hydraulique; ceci permet, d'une part, d'obtenir des rendements plus élevés que ceux qu'on peut obtenir avec la disposition traditionnelle de figure 1, de l'autre, selon ce qu'il a été exposé auparavant, elle permet d'employer des couples de fluide frigorigène - absorbant qui ne dévient pas négativement de la loi de Raoult.
On observe qu'un résultat analogue à celui obtenu par la disposition de figure 6 (mais pas revendiqué) peut être obtenu en utilisant le champ de force gravitationnel, à la place du champ de force centrifuge, en disposant les différents appareils à des niveau piézométriques différentes. En conditions statiques l'augmentation de pression qui peut être obtenue dans une colonne de longueur (h) contenente un fluide de densité (µ) sous l'action du champ gravitationnel est égale à δP1 = µ x g x h, l'augmentation de pression qu'on peut obtenir sous l'action du champ centrifuge, dans cette même colonne de liquide, disposée entre le rayon (R) et (R + h) d'un système rotatif ayant vitesse angulaire Ω, est égàle à δP2 = 1/2 x µ x Ω² x h x (2R + h): on a que δP2 > δP1 > si Ω² > 2g/(2R + h): on peut en deduire que pour des valeurs suffisamment élevées de la vitesse angulaire Ω, pour des mêmes dimension géométriques, le champ de force centrifuge permet d'obtenir des variations de pression plus élevées. Par exemple, pour h = 1 m (un mètre) µ = 1000 kg/m³, Ω = 1000 tours/minute ed R = 0 on obtient δP1 ≈ 0.1 bar sous l'action du champ de force gravitationnel, et δP2 ≈ 55 bar sous l'action du champ de force centrifuge, soit, une différence de pression 550 fois plus élevée dans le deuxième cas. De façon analogue on peut démontrer que pour des mêmes conditions géométriques, l'hauteur d'élévation obtenue dans un circuit de fluide par convection naturelle ou par thermo-émulsion, sous l'action du champ de force centrifuge est plus élevée que celle obtenue sous l'action du champ de force gravitationnel, pour des valeurs suffisamment élevées de la vitesse angulaire du système rotatif qui produit le champ de force centrifuge.
Des modalités particulières de réalisation de l'invention peuvent être obtenues en plaçant sur les systèmes rotatifs, en plus des appareils primairs agissants à pression plus élevée, certains des condenseurs ou des évaporateurs de la machine; les avantages qu'on peut en tirer sont nombreux et vont être indiqués dans la suite. On peut éliminer de cette manière certains éléments de la machine, par exemple, dans la figure 7, le condenseur 2 est placé sur le système rotatif, à une distance de l'axe de rotation telle que le recouvrement de l'énergie de pression du fluide frigorigène liquide qui passe du condenseur à l'évaporateur est obtenu totalement dans le conduit 85, on peut ainsi éliminer la soupape 64 de figure 6; d'une manière analogue, dans le cas où P1 > P2, en plaçant l'évaporateur sur le système rotatif, on peut éliminer la pompe 52 de figure 2. En plaçant opportunément les différents appareils sur le système rotatif il est possible d'obtenir que les fluides qui évoluent dans la machine accomplissent les transformations thermodynamiques voulues, qui peuvent être des transformations à pression variable, si le fluide qui parcourt ces appareils s'éloigne ou se rapproche de l'axe de rotation; on observe, à ce sujet, que la distance du condenseur à l'axe de rotation du système rotatif peut être réduite, par exemple, selon le schéma de figure 8, en plaçant une valve d'étranglement 86 sur le conduit 85 et l'évaporateur peut être placé sur le système rotatif même à une distance de l'axe de rotation plus grande par rapport au condenseur, comme il est indiqué en figure 10, en tarant convenablement la soupape 86. Le rendement des appareils placés sur le système rotatif peut être plus élevé par rapport à celui des appareils qui remplissent la même tâche en condition statiques, si l'accélération centrifuge qui s'exèrce moyennement sur le fluide contenu dans l'appareil, est plus élevée que l'accélération de gravité; par exemple, dans la portion de condenseur représentée dans le schéma de figure 11, la condensation de la vapeur 89 sur la parole 90 est gênée par la résistance thermique du film de liquide 91 qui se forme sur elle, l'épaisseur de ce film diminue, toutefois, au fur que l'accélération "a", qui s'exèrce sur celui-ci, augmente; des considérations analogues peuvent être developpées pour les dispositifs à suintement. La circulation dans les circuits "de refroidissement" des appareils placés sur le système rotatif peut être obtenu par convection naturelle ou par thermo-émulsion, sous l'action du champ de force centrifuge.
Dans la suite on décrira des modalités particulières d'application de l'invention à l'aide des figures 9, 10, 12, 13, 15 et 16, ces figures ne représentent pas des exemples d'application de l'invention puisque tous les appareils primaires sont placés sur le système rotatif.
Des modalités particulières de réalisation de l'invention sont représentées par un dispositif dans lequel un ou plusieurs des appareils, parmis ceux qui sont placés sur le système rotatif, échangent de la chaleur diréctement avec un fluide qui les lèche de l'extérieur; on peut éviter, de cette façon, d'avoir le passage de ces fluides vecteurs à travers des joints rotatifs 34 ou 35 de figure 6. Un exemple d'application de ce principe est représenté par le dispositif de figure 12, dans lequel il n'y a pas de séparateurs puisque l'absorbant utilisé dans la machine est nonvolatile: tous les appareils ont une forme circonférencielle et échangent de la chaleur à travers les surfaces 96, 97, 98, 99, léchés respectivement par les fluides vecteurs 92, 93, 94 et 95, dont la directior du flux est indiquée par les flèches en figure. Les fluides 92, 93, 94 et 95 peuvent être, à l'entrée, soit à l'état de liquides que de gaz, et on peut avoir évaporation de l'un ou condensation de l'autre en correspondance aux surfaces d'échange thermique avec les appareils. Il est nécessaire, normalement, d'employer des éléments d'étancheité; par exemple, dans le cas de figure 12, les conduits 100 solidaires avec le système rotatif et les conduits 101 solidaires avec le système fixe, sont accouplés par le joint 102; l'élément fixe 129 est accouplé avec la paroi 96 par les éléments 128, qui empêchent la sortie du fluide 92 hors du circuit. Ces éléments d'étanchéité sont simples à réaliser si le fluide qui lèche les appareils est constitué par l'air, par exemple, en utilisant comme fluides vecteurs, l'air interne et/ou externe pour la réalisation de machines à absorption pour l'emploi dans des installations d'industrie thermiques, c'est à dire des installations pour le conditionnement ou pour le refroidissement ou pour l'échauffement de tous milieux. La circulation du fluide qui lèche les appareils peut être obtenue par des couronnes mobiles solidaires au système rotatif; en figure 12, par exemple, l'ensemble des ailettes de refroidissement 105 du condenseur constituent une couronne mobile qui assure, avec le diffuseur fixe 106, la circulation du fluide 94. Dans la figure 13 le générateur est échauffé diréctement par les gaz chauds 103 produits par le brûleur 104 placé au dessous de celui-ci; il est convenable que l'échauffement de la solution dans le générateur soit uniforme, au but d'éviter des phénomènes de cristallisation de l'absorbant, on peut employer, à ce but, les mêmes materiaux et configurations pour l'échange thermique employés dans les modernes chaudières à gaz.
Une modalité particulière de réalisation de l'invention consiste en un dispositif dans lequel la circulation de la solution est obtenue par thermo-émulsion. Des machines à absorption statiques ayant cette caractéristique, connues comme machines "electrolux", ont été conçues en 1925 par les suédois Von Platen et Munters. Le principe de la thermo-émulsion, obtenue sous l'action du champ de force gravitationnel, est illustré en figure 14: la chaleur fournie à travers la paroi 108 par le fluide 107 entraîne la formation de bulles de vapeur dans la solution 130 contenue dans la colonne 109; la solution dans la colonne 109 diminue, en conséquence, sa propre densité qui devient plus petite de celle de la solution liquide 131 contenue dans la colonne 110: la solution dans la colonne 109 atteint un niveau plus élevé et passe dans la colonne 110, après séparation de la vapeur 12 dans le bac collecteur 111, on obtient ainsi la circulation de la solution. Dans le cas de la machine object de ce brevet, la thermo-émulsion peut être obtenue sous l'action du champ de force centrifuge, et on peut obtenir, de ce fait (en accord à ce qu'on a specifié auparavant) des hauteurs d'élévation plus élevées par rapport à celles obtenues sous l'action du champ de force gravitationnel. Un exemple d'application de ce principe est illustré dans la figure 13: la solution riche est échauffée aussi au niveau du conduit 113 disposé en direction radiale par rapport à l'axe de rotation et dans ce conduit il se forment de bulles de vapeur de fluide frigorigène: la densité dans le conduit 113 est inférieure par rapport à celle de la solution dans le conduit 45, et on obtient, de ce fait, le passage de la solution du conduit 113 au bac collecteur 132: on obtient ainsi la circulation de la solution par thermo-émulsion. En figure 12 la thermo-émulsion se réalise dans les conduits 49 suite de la diminution de pression de la solution qui les parcourt, ceci peut se réaliser si la température de la solution pauvre qui sort des échangeurs 6 est suffisamment élevée; en figure 12 la thermo-émulsion est obtenue aussi sous l'action du champ gravitationnel avec la évaporation du fluide frigorigène dans le conduit 104 du générateur 1. La thermo-émulsion peut égàlement être utilisée pour faciliter le passage du fluide frigorigène du condenseur à l'évaporateur, par exemple, en figure 15 on a thermo-émulsion dans le conduit 118. La thermo-émulsion peut être appliquée d'une manière semblable dans le cas où P1 > P2.
Une modalité particulière de réalisation de l'invention consiste en un dispositif dans lequel la différence de pression existante entre le système "générateur - condenseur" et le système "absorbeur - évaporateur" est compensée en partie par la pression partielle; d'un gaz inerte. Des machines statiques réalisées sur ce principe sont connues comme machines "electrolux". En figure 15 il est illustré un exemple d'application de ce principe: un mélange de vapeur de fluide frigorigène et de gaz inerte sort de l'évaporateur 4, traverse l'échangeur 113 et parvient dans l'absorbeur 3 par le conduit 115; dans l'absorbeur 3 la vapeur de fluide frigorigène condense dans la solution pauvre, le gaz inerte qui reste sort de l'absorbeur, passe dans l'échangeur de chaleur 113 et retourne dans l'évaporateur 4 à travers le conduit 114. La circulation des gaz est obtenue par convection, puisque la densité du mélange de gaz inerte et ammoniaque dans le conduit 115 est normallement plus élevée que celle du gaz inerte dans le conduit 114. Par rapport à la configuration des machines "electrolux" statiques traditionnelles on à l'avantage d'avoir une hauteur d'élévation par convection du gaz inerte plus élévée et une compensation des pression entre générateur et absorbeur suite à l'action du champ de force sur la colonne de liquide "d1" de figure 15 plus grande, du fait que ces effets se produisent sous l'action du champ de force centrifuge.
Une modalité particulière de réalisation de l'invention consiste en un dispositif dans lequel l'échauffement de la solution dans le générateur se produit principalement sans évaporation du fluide frigorigène sur les surfaces d'échange thermique; ceci est avantageux, en particulier, si l'absorbant est un sel, car on reduit, la formation de dépôts ou d'incrustations sur ces surfaces et on réduit la tendance à la cristallisation de l'absorbant. Les figures 15 et 16 montrent des exemples d'application de ce principe: le générateur est composé par les éléments 116, 117 et 118; dans l'échangeur 116 la solution riche est échauffée, l'échangeur 116 est placé à une distance de l'axe de rotation telle que la pression de la solution riche ne permet pas l'évaporation du fluide frigorigène, cette évaporation se produit pendant le passage de la solution dans les conduits 117 suite à la diminution de pression de la solution qui le parcourt, puisqu'elle se rapproche de l'axe de rotation du système 29; la solution et la vapeur se séparent, en suite, dans le bac collecteur 124. L'évaporation de la solution dans le conduit 117 concourt également à maintenir en circulation la solution par thermo-émulsion, qui peut démarrer spontanément si le circuit 8 échauffe, même partiellement, les conduits 117.
Des modalités particulières de réalisation de l'invention peuvent être obtenues selon les conditions de repos qui se réalisent sous l'action du champ gravitationnel quand on arrête la rotation du système rotatif 29. A ce but, l'axe de rotation peut être disposé, par exemple, selon la verticale, de sorte que l'hauteur des appareils en condition de repos soit, de toute manière, la même. Dans le cas dé figure 12 on a qu'en absence de rotation du système 29, la solution contenue dans le générateur 1 se receuillit dans l'absorbeur 3, et ell'est soustraite à l'échauffement de la part du fluide 93. Dans le cas de figure 13 on a qu'en absence de rotation du système 29 le fluide frigorigène liquide contenu dans l'évaporateur 4 et dans le condenseur 2 se receuillit dans le générateur et on obtient la sortie de l'évaporateur et du condenseur de la solution qui aurait pus de façon accidentelle y rentrer.
Des modalités particulières de réalisation de l'invention peuvent être obtenues en plaçant, sur les conduits qui rélient les appareils, des soupapes commandées, pour régler le fonctionnement de la machine et/ou pour isoler un ou plusieurs des appareils; la configuration de la machine object de ce brevet permet, en particulier, de commander certaines de ces soupapes placées sur le système rotatif 29, aussi en fonction de la force centrifuge; il est ainsi possible de régler la machine en modifiant la vitesse angulaire, en fonction des effets que ces variation ont sur le degrès d'ouverture de ces soupapes. Un exemple d'application de ce principe est illustrée en figure 16: les soupapes 119, 120, 121, 122, 123, permettent de régler les flux des fluides qui évoluent dans la machine; en outre, avec la fermeture de certaines de ces soupapes on peut isoler un ou plusieurs de ces appareils, par exemple, lors de l'extinction de la machine, pour obtenir successivement un démarrage plus rapide de celle-ci. On peut employer des soupapes différentes pour assurer les fonctions de régulation et d'interruption du flux dans les conduits.
Des modalités particulières de réalisation de l'invention sont représentés par une machine ayant une ou plusieurs caractéristiques supplémentaires parmis celles indiquées dans la suite, éventuellement combinées entr'elles: Les conduits qui relient les appareils, peuvent être à section constante ou variable, peuvent être réalisés selon des géometries courbes, par exemple, selon les géométries optimales deduites de l'expérience pour les conduits des couronnes mobiles des pompes ou des turbines, aussi au but d'éviter les phénomènes de cavitation, peuvent être fournis, à l'interieur, des canaux aptes à guider le fluide qui les traverse, peuvent être liés diréctement entr'eux, de sorte à réaliser la compensation dirécte entre les forces que les fluides exercent sur eux, par exemple, selon la configuration de figure 17 dans laquelle les conduits 45 et 49 sont, en partie, disposés selon un plan pérpendiculière à l'axe de rotation, et liés entr'eux par des élément 54; certains des appareils peuvent être réliés avec plusieurs appareils du même genre, par exemple, un générateur peut être rélié avec plusieurs absorbeurs, etc.; certains des appareils peuvent être circonférentiels, par exemple du genre de ceux des figures 12 et 13 ou peuvent être réalisés en forme de tubes 125 enroulés en hélice, à rayon constant sélon le schéma de figure 18, ou sélon le schéma de figure 19 où l'hélice selon laquelle est enroulé le tube 125 est à rayon variable, de sorte à faciliter la circulation du liquide 126 et/ou la circulation convection des gaz 127 qui le parcourrent; la machine peut avoir certains des appareils du même genre, par exemple, des générateurs, agissants à des pressions différentes, pour réaliser, un processus thermodynamique à plusieurs étages, ceci peut être obtenu, par exemple, en plaçant ces éléments à des distances différentes de l'axe de rotation des systèmes rotatifs; les appareils placés sur le système rotatif peuvent être mobiles, ce qui peut permettre de modifier les conditions du processus, en modifiant la position de ces appareils; les appareils peuvent être placés sur le système rotatif de façon asymétrique, et balancés par des convénables cotrepoids; la machine peut inclure plusieurs systèmes rotatifs 29.
Toutes les modalités particulières de réalisation de l'invention et toutes les caractéristiques supplémentaires que la machine peut avoir et mentionnées dans ce texte peuvent être appliquées, normallement, dans le cas ou P1 > P2.
Toutes les modalités particulières de réalisation de l'invention et toutes les caractéristiques supplémentaires que la machine peut avoir et mentionnés dans ce texte peuvent être, en toutes les manières, combinés entr'eux: le avantages tirés de chacune de ces modalités de réalisation et de chacune de ces caractéristiques, lorsqu'elles sont en combinaison avec d'autres sont normallement plus élevés des avantages tirés de leur application individuelle.

## Revendications

1. Machine thermique à absorption qui peut être utilisée soit comme machine frigorifique soit comme pompe à chaleur comprenant des appareils primaires tels qu'un ou plusieurs générateurs (1) et absorbeurs (3), condenseurs (2), évaporateurs (4), circuits (8, 58, 61, 65) par lesquels ces appareils échangent de la chaleur avec l'extérieur, une convenable quantité de fluide frigorigène, une convenable quantité de substance absorbante, des conduits (57) pour le passage de la vapeur de fluide frigorigène des générateurs aux condenseurs, des conduits (5) pour le passage de la solution riche des absorbeurs aux générateurs, des conduits (59) pour le passage de la solution pauvre des générateurs aux absorbeurs, des conduits (56) pour le passage du fluide frigorigène liquide des condenseurs aux évaporateurs, des conduits (62) pour le passage de la vapeur de fluide frigorigène des évaporateurs aux absorbeurs, qui peut aussi inclure un ou plusieurs échangeurs de chaleur, par exemple, pour l'échange de chaleur entre la solution riche et la solution pauvre (6) ou entre le fluide frigorigène à l'étàt de liquide et celui à l'état de vapeur (63), des soupapes ou des moteurs hydrauliques pour obtenir la diminution de la pression des fluides qui évoluent dans la machine (54, 60, 64), des séparateurs (9) pour rectifier la vapeur qui sort des générateurs avec les relatifs circuits de refroidissement (10), des pompes pour obtenir l'augmentation de pression des fluides qui évoluent dans la machine (7, 36, 52), un ou plusieurs systèmes rotatifs (29), des systèmes d'entraînement (30) qui peuvent mettre en rotation ces systèmes rotatifs, des moyens (34) (35) pour le passage d'un ou plusieurs fluides des conduits fixes aux conduits solidaires avec des systèmes rotatifs et vice-versa, dans laquelle certains des absorbeurs si ce sont les absorbeurs qui agissent à pression plus élevée ou certains des générateurs si ce sont les générateurs qui agissent à pression plus élevée et une partie, au moins, des conduits d'adduction et de refoulement relatifs (45) (49) sont placés sur certains des systèmes rotatifs caractérisée par le fait que les appareils primaires agissant à pression inférieure sont fixes, et par le fait que lorsque les systèmes rotatifs sont maintenus en rotation la solution qui passe des appareils primaires fixes, à d'autres appareils primaires agissants à une pression plus élevée et placés sur ces systèmes rotatifs, s'éloigne, dans l'ensemble, de l'axe de rotation de ces systèmes et augmente dans l'ensemble sa propre pression par effet du travail mécanique accomplit sur la solution par les conduits solidaires avec ces systèmes rotatifs qu'elle traverse, et par le fait que, lorsque les systèmes rotatifs sont maintenus en rotation, la solution qui passe des appareils primaires placés sur ces systèmes rotatifs à d'autres appareils primaires fixes agissants à une pression inférieure, se rapproche, dans l'ensemble, de l'axe de rotation de ces systèmes et diminue dans l'ensemble sa propre pression par effet du travail mécanique que la solution accomplit sur les conduits solidaires à ces systèmes rotatifs qu'elle traverse.

2. Machine selon la revendication 1 caractérisée par le fait que tous les appareils primaires agissants à pression plus élevée sont placés sur des systèmes rotatifs.

3. Machine selon la revendication 2 caractérisée par le fait que les appareils primaires agissants à pression plus élevée et placés sur les systèmes rotatifs (29) sont des générateurs (1).

4. Machine selon la revendication 2 caractérisée par le fait que les appareils primaires agissants à pression plus élevée et placés sur les systèmes rotatifs (29) sont des absorbeurs (3).

5. Machine selon la revendication 2 caractérisée par le fait que les axes de rotation de certains des systèmes rotatifs (29) sont disposés en direction de la verticale.

6. Machine selon la revendication 2 caractérisée par le fait que la circulation de la solution entre certains des générateurs (1) et certains des absorbeurs (3) est obtenue par thermo-émulsion.

7. Machine selon la revendication 6 caractérisée par le fait que la circulation de la solution entre certains des générateurs (1) et certains des absorbeurs (3) est obtenue par thermo-émulsion réalisée aussi sous l'action du champ de force centrifuge.

8. Machine selon la revendication 2 caractériséè par le fait que certains des appareils placés sur certains des systèmes rotatifs (29) sont léchés de l'extérieur et diréctement par des fluides vecteurs (92, 93, 94, 95) avec lesquels ils échangent de la chaleur.

9. Machine selon la revendication 8 caractérisée par le fait qu'elle inclut un ou plusieurs brûleurs (104), et par le fait que certains des appareils de la machine placés sur certains des systèmes rotatifs sont léchés diréctement, au niveau des surfaces d'échange thermique (97), par les gaz chauds produits par ces brûleurs.

10. Machine selon la revendication 3 caractérisée par le fait que dans certains des générateurs parmi ceux placés sur des systèmes rotatifs, l'échange thermique se réalise principalement dans des zones (116) du générateur placées à une distance suffisamment élevée de l'axe de rotation de ces systèmes rotatifs pour que la pression de la solution dans ces zones ne permette pas l'évaporation du fluide frigorigène, et par le fait que l'évaporation du fluide frigorigène se produit successivement, dans des zones (1117) du générateur dans lesquelles la solution se rapproche de l'axe de rotation des systèmes rotatifs et diminue en conséquence sa propre pression.

11. Machine selon la revendication 2 caractérisée par le fait que sur certains des systèmes rotatifs (29) sont placés, en plus des appareils primaires agissants à pression plus élevée, aussi d'autres appareils de la machine.

12. Machine selon la revendication 11 caractérisée par le fait que certains des condenseurs sont placés sur certains des systèmes rotatifs.

13. Machine selon la revendications 12 caractérisée par le fait que le recouvrement de l'énergie de pression du liquide frigorigène qui passe de certains des condenseurs parmi ceux positionnés sur le système (35) rotatif, à certains des évaporateurs, est obtenu totalement dans les conduits (85) qui relient ces deux appareils, sans l'emploi de soupapes d'étranglement.

14. Machine selon la revendication 2 caractérisée par le fait que la différence de pression entre le système "générateur (1) - condenseur (2)" et le système "absorbeur (3) - évaporateur (4)" est compensée, en partie, par la présence d'un gaz inerte à l'interieur des appareils agissants à la pression plus basse.

15. Machine selcn la revendication 14 caractérisée par le fait que la circulation du gaz inerte par convection se réalise aussi sous l'action du champ de force centrifuge.

16. Machine selon la revendication 2 caractérisée par le fait que la machine inclut des soupapes de régulation commandées aussi par la force centrifuge et par le fait que certaines de ces soupapes interceptent le fluide qui passe dans des conduits solidaires à des systèmes rotatifs.

17. Machine selon la revendication 2 caractérisée par le fait que la machine inclut des soupapes commandées aussi par la force centrifuge et par le fait que ces soupapes interrompent le passage du fluide qui passe à travers certains des conduits solidaires à des systèmes rotatifs quand la vitesse de rotation de ces systèmes descend au dessous d'une certaine valeur.

18. Machine selon la revendication 2 caractérisée par le fait que certains des appareils placés sur les systèmes rotatifs ont une géométrie circonférentielle.

19. Machine selon la revendication 2 caractérisée par le fait que certains des appareils placés sur des systèmes rotatifs sont réalisés en forme de tubes 125 enroulés en hélice.

20. Emploi de la machine selon la revendication 1 pour la réalisation des installations d'industrie thermique.

## Patentansprüche

1. Absorptions-Wärmekraftmaschine zur Verwendung als Kühlgerät oder als Wärmepumpe, bestehend aus Primärkomponenten wie einem oder mehreren "Generatoren" (1), "Kondensatoren" (2), "Absorber" (3), "Verdampfer" (4) und Kreisläufe (8, 58, 61, 65), über die diese Komponenten Wärme nach außen abgeben, eine entsprechende Menge einer Kälteflüssigkeit, eine entsprechende Menge eines absorbierenden Mediums, Leitungen (57) zur Überführung des Kühlflüssigkeitsdampfs von den Generatoren zu den Kondensatoren, Leitungen (5) zur Überführung der angereicherten Lösung von den Absorbern zu den Generatoren, Leitungen (59) zur Überführung der mageren Lösung von den Generatoren zu den Absorbern, Leitungen (56) zur Überführung des flüssigen Kühlmediums von den Kondensatoren zu den Verdampfern, Leitungen (62) zur Überführung des Kühlflüssigkeitsdampfs von den Verdampfern zu den Absorbern, mit gegebenenfalls einem oder mehreren Wärmetauschern, beispielsweise zum Wärmeaustausch zwischen der angereicherten und der mageren Lösung (6) oder zwischen der Kühlflüssigkeit im flüssigen und derjenigen im dampfförmigen Zustand (63), Ventile oder Hydraulikmotoren zum Abbau des Flüssigkeitsdrucks in der Maschine (54, 60, 64), Separatoren (9) zur Ausrichtung des aus den Generatoren austretenden Dampfs auf die entsprechenden Kühlkreise (10), Pumpen zum Aufbau des Flüssigkeitsdrucks in der Maschine (7, 36, 52), einer oder mehrerer Drehvorrichtungen (29), Antriebsvorrichtungen (30) zur Betätigung dieser Drehvorrichtungen, Mittel (34, 35) zur Überführung einer oder mehrerer Flüssigkeiten von den festen Leitungen zu den mit den Drehvorrichtungen verbundenen Leitungen und umgekehrt, wobei einige der Absorber, wenn es diese sind, die mit höherem Druck arbeiten oder einige der Generatoren, wenn es diese sind, die mit einem höheren Druck arbeiten und mindestens ein Teil der Zuführungs- und Förderleitungen (45, 49) an einigen der Drehvorrichtungen angeordnet sind, dadurch gekennzeichnet, daß die mit geringerem Druck arbeitenden Primärkomponenten feststehen sowie dadurch, daß bei Drehbewegung der Drehvorrichtungen die sich von den feststehenden Primärkomponenten zu anderen, mit höherem Druck arbeitenden und an den Drehvorrichtungen angebrachten Primärkomponenten bewegende Lösung insgesamt von den Drehachsen dieser Vorrichtungen wegbewegt und sich deren Eigendruck insgesamt aufgrund der mechanischen Arbeit erhöht, die von den mit den Drehvorrichtungen verbundenen und von der Lösung durchströmten Leitungen auf die Lösung ausgeübt wird, und dadurch, daß bei Drehbewegung der Drehvorrichtungen die Lösung, die von den an diesen Drehvorrichtungen angeordneten Primärkomponenten zu den feststehenden und mit geringerem Druck betriebenen Primärkomponenten überführt wird, sich insgesamt auf die Rotationsachse dieser Systeme zubewegt und sich deren Eigendruck insgesamt aufgrund der mechanischen Arbeit verringert, die die Lösung auf die mit den Drehvorrichtungen verbundenen und von ihr durchströmten Leitungen ausübt.

2. Maschine nach Anspruch 1,
dadurch gekennzeichnet, daß
sämtliche mit höherem Druck arbeitenden Primärkomponenten an Drehvorrichtungen angebracht sind.

3. Maschine nach Anspruch 2,
dadurch gekennzeichnet, daß
es sich bei den mit höherem Druck arbeitenden und an den Drehvorrichtungen (29) angebrachten Primärkomponenten um Generatoren (1) handelt.

4. Maschine nach Anspruch 2,
dadurch gekennzeichnet, daß
es sich bei den mit höherem Druck arbeitenden und an den Drehvorrichtungen (29) angebrachten Primärkomponenten um Absorber (3) handelt.

5. Maschine nach Anspruch 2,
dadurch gekennzeichnet, daß
die Rotationsachsen bestimmter Drehvorrichtungen (29) vertikal angeordnet sind.

6. Maschine nach Anspruch 2,
dadurch gekennzeichnet, daß
die Umwälzung der Lösung zwischen bestimmten Generatoren (1) und bestimmten Absorbern (3) über thermische Emulsion erfolgt.

7. Maschine nach Anspruch 6,
dadurch gekennzeichnet, daß
die Umwälzung der Lösung zwischen bestimmten Generatoren (1) und bestimmten Absorbern (3) über thermische Emulsion erfolgt, die u.a. durch das Fliehkraftfeld sichergestellt wird.

8. Maschine nach Anspruch 2,
dadurch gekennzeichnet, daß
daß einige der an einigen der Drehvorrichtungen (29) angebrachten Komponenten von außen direkt von Flüssigkeiten (92, 93, 94, 95) beaufschlagt werden, mit denen ein Wärmeaustausch erfolgt.

9. Maschlne nach Anspruch 8,
dadurch gekennzeichnet, daß
daß sie mit einem oder mit mehreren Brennern (104) versehen ist, sowie dadurch, daß einige der an bestimmten Drehvorrichtungen angebrachten Komponenten im Bereich der Wärmeübergangsfläche (97) direkt von den durch die Brenner erzeugten, heißen Gasen beaufschlagt werden.

10. Maschine nach Anspruch 3,
dadurch gekennzeichnet, daß
in einigen der an den Drehvorrichtungen angebrachten Generatoren der Wärmeaustausch vorwiegend in den Bereichen (116) des Generators erfolgt, die in so großer Entfernung von der Rotationsachse der Drehvorrichtungen angeordnet sind, daß der Druck, unter der die Lösung in diesen Bereichen steht, eine Verflüchtigung der Kühlflüssigkeit verhindert, sowie dadurch, daß die Verflüchtigung der Kühlflüssigkeit fortschreitend in den Bereichen (117) des Generators erfolgt, in denen sich die Lösung der Rotationsachse der Drehvorrichtungen zubewegt und damit eine Verringerung des Eigendrucks erfährt.

11. Maschine nach Anspruch 2,
dadurch gekennzeichnet, daß
an bestimmten Drehvorrichtungen (2) zusätzliche, mit höherem Druck arbeitende Primärkomponenten sowie andere Maschinenkomponenten angeordnet sind.

12. Maschine nach Anspruch 11,
dadurch gekennzeichnet, daß
einige der Kondensatoren an Drehvorrichtungen angeordnet sind.

13. Maschine nach Anspruch 12,
dadurch gekennzeichnet, daß
die Absorption der Druckenergie der Kühlflüssigkeit, die von bestimmten der an der Drehvorrichtung angeordneten Kondensatoren zu bestimmten Verdampfern strömt, vollständig in den Leitungen (85) erfolgt, die diese beiden Komponenten verbinden, ohne daß hierbei Drosselventile zum Einsatz kommen.

14. Maschine nach Anspruch 2,
dadurch gekennzeichnet, daß
die Druckdifferenz zwischen dem System "Generator"(1)/"Kondensator"(2) und dem System "Absorber"(3)/"Verdampfer"(4) teilweise durch ein Inertgas kompensiert wird, das sich im Innern der mit einem niedrigeren Druck arbeitenden Komponenten befindet.

15. Maschine nach Anspruch 14,
dadurch gekennzeichnet, daß
die Umwälzung des Inertgases nicht nur durch Konvektion, sondern auch durch das Fliehkraftfeld sichergestellt wird.

16. Maschine nach Anspruch 2,
dadurch gekennzeichnet, daß
die Maschine mit u.a. fliehkraftgesteuerten Regelventilen versehen ist, sowie dadurch, daß bestimmte dieser Ventile auf die Flüssigkeit einwirken, die die an den Drehvorrichtungen angeordneten Leitungen durchströmt.

17. Maschine nach Anspruch 2,
dadurch gekennzeichnet, daß
die Maschine mit u.a. fliehkraftgesteuerten Regelventilen versehen ist, sowie dadurch, daß diese Ventile den Flüssigkeitsstrom in bestimmten, an den Drehvorrichtungen angeordneten Leitungen unterbrechen, wenn die Drehgeschwindigkeit dieser Vorrichtungen einen bestimmten Mindestwert unterschreitet.

18. Maschine nach Anspruch 2,
dadurch gekennzeichnet, daß
einige der an den Drehvorrichtungen angeordneten Komponenten ringförmig ausgebildet sind.

19. Maschine nach Anspruch 2,
dadurch gekennzeichnet, daß
einige der an den Drehvorrichtungen angeordneten Komponenten in Form spiralförmiger Röhren (125) ausgebildet sind.

20. Maschine nach Anspruch 1 zur Verwendung in industriellen Wärmekraftanlagen.

## Claims

1. Thermal absorption machine which can be used as a refrigerating machine or as a heat pump, comprising primary appliances such as one or a plurality of "generators" (1) and "condensers" (2) and "absorbers" (3) and "evaporators" (4), circuits (8,58,61,65) by means of which these appliances exchange heat with the exterior, an appropriate quantity of refrigerant fluid, an appropriate quantity of absorbent substance, conduits (57) for passage of the vapour of the refrigerant fluid from the generator to the condensers, conduits (5) for passage of the rich solution from the absorbers to the generators, conduits (59) for passage of the lean solution from the generators to the absorbers, conduits (56) for passage of the refrigerant liquid fluid from the condensers to the evaporators, conduits (62) for passage of the vapour of the refrigerant fluid from the evaporators to the absorbers, which may also include one or a plurality of heat exchangers, for example for exchanging heat between the rich solution and the lean solution (6), or between the refrigerant fluid in the liquid state and the same in the vapour state (63), hydraulic valves or motors for obtaining a reduction in the pressure of the fluids which evolve in the machine (54,60,64), separators (9) for rectifying the vapour which emerges from the generators with the relative cooling circuits (10), pumps in order to obtain an increase in pressure in the fluids which evolve in the machine (7,36,52), one or a plurality of rotary systems (29), drive systems (30) which can cause these rotary systems to rotate, means (34,35) for the passage of one or a plurality of fluids from the fixed conduits to the conduits integral with the rotary systems and vice versa in which certain of the absorbers, if these are absorbers which operate at higher pressure, or certain of the generators, if these are generators which operate at higher pressure and a portion at least of the relative supply and lift conduits (45,49) are placed on certain of the rotary systems, characterised in that the primary appliances acting at lower pressure are fixed, and in that, when the rotary systems are kept in rotation, the solution which passes from the fixed primary appliances to other primary appliances operating at a higher pressure and placed on these rotary systems, moves away as a whole from the axis of rotation of the systems, and increases as a whole its own pressure by the effect of the mechanical work accomplished on the solution by the conduits integral with these rotary systems through which it passes, and in that, when the rotary systems are kept in rotation, the solution which passes from the primary appliance is placed on these rotary systems to other fixed primary appliances operating at a lower pressure, approaches as a whole the axis of rotation of these systems and as a whole reduces its own pressure by the effect of the mechanical work which the solution carries out on the conduit integral with these rotary systems through which it passes.

2. Machine according to claim 1, characterised in that all the primary appliances operating at higher pressure are placed on rotary systems.

3. Machine according to claim 2, characterised in that the primary appliances operating at higher pressure and placed on rotary systems (29) are generators (1).

4. Machine according to claim 2, characterised in that the primary appliances operating at higher pressure and placed on rotary systems (29) are absorbers (3).

5. Machine according to claim 2, characterised in that the axis of rotation of certain of the rotary systems (29) are disposed in the direction of the vertical.

6. Machine according to claim 2, characterised in that the circulation of the solution between certain of the generators (1) and certain of the absorbers (3) is obtained by thermo-emulsion.

7. Machine according to claim 6, characterised in that the circulation of the solution between certain of the generators (1) and certain of the absorbers (3) is obtained by thermo-emulsion also carried out under the effect of the field of centrifugal force.

8. Machine according to claim 2, characterised in that certain of the appliances placed on certain of the rotary systems (29) are washed from the exterior and directly by vector fluids (92,93,94,95) with which they exchange heat.

9. Machine according to claim 8, characterised in that it includes one or a plurality of burners (104) and in that certain of the appliances of the machine placed on certain of the rotary systems are washed directly, at the level of the thermal exchange surfaces (97), by the hot gases produced by these burners.

10. Machine according to claim 3, characterised in that in certain of the generators among those placed on rotary systems, thermal exchange is carried out principally in zones (116) of the generator placed at a sufficiently great distance from the axis of rotation of these r.otary systems so that the pressure of the solution in these zones does not permit evaporation of the refrigerant fluid, and in that evaporation of the refrigerant fluid occurs successively, in zones (117) of the generator in which the solution approaches the axis of rotation of the rotary system and consequently reduces its own pressure.

11. Machine according to claim 2, characterised in that, there are placed on certain of the rotary systems (2) in addition, primary appliances operating at a higher pressure, as well as other appliances of the machine.

12. Machine according to claim 11, characterised in that certain of the condensers are placed on rotary systems.

13. Machine according to claim 12, characterised in that recovery of the energy of pressure of the refrigerant liquid which passes from certain of the condensers among those positioned on the rotary system to certain of the evaporators is entirely obtained in the conduits (85) which connect these two appliances, without using throttle valves.

14. Machine,according to claim 2, characterised in that the difference in pressure between the "generator (1) - condenser (2)" system and the "absorber (3) - evaporator (4) system" is compensated in part by the presence of an inert gas in the interior of the appliances operating at 15 lower pressure.

15. Machine according to claim 14, characterised in that the circulation of inert gas by convection is also effected under the effect of the field of centrifugal force.

16. Machine according to claim 2, characterised in that the machine includes regulation valves controlled also by centrifugal force, and in that certain of these valves intercept the fluid which passes into conduits integral with rotary systems.

17. Machine according to claim 2, characterised in that the machine includes valves controlled also by centrifugal force, and in that these valves interrupt passage of the fluid which passes through certain of the conduits integral with rotary systems when the speed of rotation of these systems drops beneath a certain value.

18. Machine according to claim 2, characterised in that certain of the appliances placed on the rotary systems have a circumferential geometry.

19. Machine according to claim 2, characterised in that certain of the appliances placed on rotary systems are made in the form of tubes wound into a spiral (125).

20. Use of the machine according to claim 1 for producing industrial thermal installations.
